(19) Europäisches Patentamt
European Patent Office
Office européen des brevets

(11) **EP 4 467 584 A1**

(12) **EUROPEAN PATENT APPLICATION**
published in accordance with Art. 153(4) EPC

(43) Date of publication:
**27.11.2024 Bulletin 2024/48**

(21) Application number: **23883104.4**

(22) Date of filing: **25.10.2023**

(51) International Patent Classification (IPC):
**C08F 259/04** $^{(2006.01)}$     **C08F 8/04** $^{(2006.01)}$
**C08F 4/06** $^{(2006.01)}$     **C08F 6/12** $^{(2006.01)}$

(52) Cooperative Patent Classification (CPC):
**C08F 4/06; C08F 6/12; C08F 8/04; C08F 259/04**

(86) International application number:
**PCT/KR2023/016682**

(87) International publication number:
**WO 2024/090999 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.10.2022 KR 20220139524**

(71) Applicant: **LG Chem, Ltd.**
**Yeongdeungpo-gu**
**Seoul 07336 (KR)**

(72) Inventors:
• **PARK, Jae Hyun**
  **Daejeon 34122 (KR)**
• **AHN, Seong Yong**
  **Daejeon 34122 (KR)**
• **LEE, Hyun Min**
  **Daejeon 34122 (KR)**
• **LIM, Joong Chul**
  **Daejeon 34122 (KR)**
• **PAIK, Hyun Jong**
  **Busan 46232 (KR)**
• **CHO, Hong Yul**
  **Busan 46296 (KR)**
• **KIM, Dong Woo**
  **Busan 46294 (KR)**
• **JEONG, Seok Hyeon**
  **Ulsan 44607 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD FOR PRODUCING VINYL CHLORIDE-BASED COPOLYMER**

(57) The present invention relates to a method for producing a vinyl chloride-based copolymer by copolymerizing a polymerizable monomer with a vinyl chloride-based polymer, wherein the method is capable of producing a vinyl chloride-based copolymer with high heat resistance by optimizing the ratio between repeating units in the chain of polyvinyl chloride and a reducing agent, monomer, catalyst, and ligand.

**EP 4 467 584 A1**

**Description**

**[Technical Field]**

**CROSS-REFERENCE TO RELATED APPLICATION**

This application claims the benefit of priority to Korean Patent Application No. 10-2022-0139524 filed on October 26, 2022, the disclosure of which is incorporated herein by reference in its entirety.

**TECHNICAL FIELD**

The present invention relates to a method for producing a highly functional vinyl chloride-based copolymer using atom transfer radical polymerization (hereinafter abbreviated as ATRP).

**[Background Art]**

Polyvinyl chloride resin, a representative thermoplastic resin, has strong flexibility and wear resistance, and is easy to add various colors, so it is widely used in various product fields. The polyvinyl chloride resin is manufactured by polymerizing a vinyl chloride monomer, wherein the vinyl chloride monomer has a low reactivity with other types of monomers, and thus, the resin is not well used in the form of a copolymer, but is mainly used in the form of a homopolymer such as polyvinyl chloride.

Therefore, as a method for complementing the inferior properties of the polyvinyl chloride, a method of blending the polyvinyl chloride with other kinds of polymers having excellent necessary properties is most commonly used. However, this method not only requires a separate facility for blending processing, but also causes another problem in that if the compatibility between the polymer to be blended and the polyvinyl chloride is low, the desired properties cannot be obtained, or the blending processing itself is not easy.

To replace this blending processing method, copolymerization using atomic transfer radical polymerization (ATRP) is being studied. The ATRP is a method capable of further radically polymerizing a polymerizable monomer to polyvinyl chloride in a polymer state, wherein the polymerizable monomer, such as styrene or methyl methacrylate, can be copolymerized with the polyvinyl chloride, and the poor properties of the polymer itself can be supplemented by the copolymerization of the monomer. However, even when applying the ATRP, the characteristics of the produced copolymer may vary depending on conditions such as the type and amount of catalyst used, the type and amount of reducing agent, the type and amount of ligand, and the polymerization temperature. Accordingly, there is a need for in-depth research on the copolymer production method capable of preparing an optimal vinyl chloride-based copolymer.

**Prior Art Literature**

(Patent Document 1) KR 10-2013-0136936 A (published on December 13, 2013)
(Patent Document 2) KR 10-2014-0125134 A (published on October 28, 2014)

**[Disclosure]**

**[Technical Problem]**

The present invention is intended to solve the problems of the prior art described above, and is to provide a method for producing a vinyl chloride-based copolymer using ATRP, the method capable of producing a vinyl chloride-based copolymer with high functionality, especially high heat resistance, by optimizing the ratio between repeating units in the chain of polyvinyl chloride and a reducing agent, monomer, catalyst, and ligand.

**[Technical Solution]**

In order to solve the above problems, the present invention provides a method of producing a vinyl chloride-based copolymer.

Specifically,

(1) the present invention provides a method for producing a vinyl chloride-based copolymer, the method including the steps of: adding a reducing agent, a polymerizable monomer, a catalyst, and a ligand to a solution containing polyvinyl chloride (S1); and performing a polymerization reaction by raising the temperature of the solution (S2), wherein a molar ratio between repeating units in the chain of the polyvinyl chloride in the solution and the added catalyst is 1000:0.3 to 1000:0.6.

(2) The present invention provides a method for producing a vinyl chloride-based copolymer according to (1) above, wherein the catalyst is at least one selected from the group consisting of Cu(0), Fe(0), $Cu_2Te$, $Cu_2Se$, $CuCl_2$, $Cu_2S$, $Cu_2O$, $FeCl_2$, and $Na_2S_2O_4$.

(3) The present invention provides a method for producing a vinyl chloride-based copolymer according to (1) or (2) above, wherein a molar ratio between repeating units in the chain of the polyvinyl chloride in the solution and the added polymerizable monomer is 1: 1 to 1:3.

(4) The present invention provides a method for producing a vinyl chloride-based copolymer according to any one of (1) to (3) above, wherein the polymerizable monomer is at least one selected from the group consisting of C1-12 alkyl (meth)acrylate, styrene, C3-12 cycloalkyl (meth)acrylate, C1-12 sulfoalkyl (meth)acrylate, acrylonitrile, polyoxyethylene (meth)acrylate, poly(ethylene glycol) methyl ether (meth)acrylate, (2-acetoacetoxy)ethyl (meth)acrylate, (meth)acrylamide, N-vinylpyrrolidone, and derivatives thereof.

(5) The present invention provides a method for producing a vinyl chloride-based copolymer according to any one of (1) to (4) above, wherein a molar ratio between repeating units in the chain of the polyvinyl chloride in the solution and the added ligand is 1000:0.5 to 1000:1.5.

(6) The present invention provides a method for producing a vinyl chloride-based copolymer according to any one of (1) to (5) above, wherein the ligand is at least one selected from the group consisting of 2,2'-bipyridine, triphenylphosphine, alkyl-2,2'-bipyridine, 4,4-dinonyl-2,2'-bipyridine, 4,4-diheptyl-2,2'-bipyridine, tris(2-aminoethyl)amine, tris[2-(dimethylamino)ethyl]amine, tris[(2-pyridyl)methyl]amine, N,N,N',N',N"-pentamethyldiethylene triamine, 1,1,4,7,10,10-hexamethyltriethylene tetraamine and tetramethylethylene diamine.

(7) The present invention provides a method for producing a vinyl chloride-based copolymer according to any one of (1) to (6) above, wherein the reducing agent is at least one soluble reducing agents selected from the group consisting of $Sn(EH)_2$, ascorbic acid, glucose, and azobisisobutyronitrile.

(8) The present invention provides a method for producing a vinyl chloride-based copolymer according to any one of (1) to (7) above, wherein a molar ratio between repeating units in the chain of the polyvinyl chloride in the solution and the added reducing agent is 1000:5 to 1000:20.

(9) The present invention provides a method for producing a vinyl chloride-based copolymer according to any one of (1) to (8) above, wherein the reducing agent is a metallic solid reducing agent selected from the group consisting of copper, zinc, magnesium, and iron.

(10) The present invention provides a method for producing a vinyl chloride-based copolymer according to any one of (1) to (9) above, wherein the solvent of the solution is at least one selected from the group consisting of cyclohexanone, tetrahydrofuran, methyl ethyl ketone, and dimethylformamide.

(11) The present invention provides a method for producing a vinyl chloride-based copolymer according to any one of (1) to (10) above, wherein the step S1 includes a bubbling step for removing oxygen in the solution.

(12) The present invention provides a method for producing a vinyl chloride-based copolymer according to any one of (1) to (11) above, wherein the step S2 is performed at a temperature of 25 to 200°C for 0.1 to 100 hours.

(13) The present invention provides a method for producing a vinyl chloride-based copolymer according to any one of (1) to (12) above, wherein the step S2 is performed until the polymerization conversion rate is 50% or more.

(14) The present invention provides a method for producing a vinyl chloride-based copolymer according to any one of (1) to (13) above, wherein the method further includes the steps of: cooling and filtering the polymerization reaction product (S3); and drying the filtered vinyl chloride-based copolymer (S4).

(15) The present invention provides a vinyl chloride-based copolymer comprising a vinyl chloride monomer-derived unit and a polymerizable monomer-derived unit and having a glass transition temperature (Tg) of 90 to 120°C, wherein the polymerizable monomer is at least one selected from the group consisting of C1-12 alkyl (meth)acrylate, styrene, C3-12 cycloalkyl (meth)acrylate, C1-12 sulfoalkyl (meth)acrylate, acrylonitrile, polyoxyethylene (meth)acrylate, poly(ethylene glycol) methyl ether (meth)acrylate, (2-acetoacetoxy)ethyl (meth)acrylate, (meth)acrylamide, N-vinylpyrrolidone, and derivatives thereof.

**[Advantageous Effects]**

The vinyl chloride-based copolymer produced by using the production method of the present invention has a higher glass transition temperature than the existing vinyl chloride-based copolymers, and thus can be widely applied to various product fields that require high heat resistance.

**[Best Modes of the Invention]**

Hereinafter, the present invention will be described in more detail.

The terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his invention.

## Method for producing vinyl chloride-based copolymer

The present invention relates to a method for producing a vinyl chloride-based copolymer using existing ATRP, wherein the method is capable of realizing a high conversion rate in the polymerization process and excellent thermal stability of the finally produced copolymer by optimizing the amount of catalyst added based on the number of moles of repeating units in the chain of polyvinyl chloride in the solution.

Specifically, the present invention provides a method for producing a vinyl chloride-based copolymer, the method including the steps of: adding a reducing agent, a polymerizable monomer, a catalyst, and a ligand to a solution containing polyvinyl chloride (S 1); and performing a polymerization reaction by raising the temperature of the solution (S2), wherein a molar ratio between repeating units in the chain of the polyvinyl chloride in the solution and the added catalyst is 1000:0.3 to 1000:0.6.

In the present invention, the vinyl chloride-based copolymer is formed by further copolymerizing a polymerizable monomer with polyvinyl chloride in a polymer state, and thus the polyvinyl chloride is used as one reaction raw material. The polyvinyl chloride used in the present invention may preferably have a weight average molecular weight of 30,000 to 100,000 g/mol, and more specifically, a weight average molecular weight of 50,000 to 85,000 g/mol. When polyvinyl chloride having a weight average molecular weight within the above-described range is used, the polyvinyl chloride is well dispersed in the solvent, and the polymerizable monomer can be uniformly copolymerized.

Meanwhile, the catalyst introduced in the step S 1 may be at least one selected from the group consisting of Cu(0), Fe(0), $Cu_2Te$, $Cu_2Se$, $CuCl_2$, $Cu_2S$, $Cu_2O$, $FeCl_2$, $Na_2S_2O_4$, and particularly preferably CuCh. The catalysts listed above have properties capable of effectively donating electrons to polyvinyl chloride, and are used in polymerization reactions using ATRP.

The main technical feature of the present invention is to optimize the input amount of the catalyst based on the amount of repeating units in the polyvinyl chloride chain to improve the properties, especially heat resistance, of the finally produced vinyl chloride-based copolymer. More specifically, the amount of catalyst added in the step S 1 may be such that the molar ratio between the repeating unit in the chain of polyvinyl chloride in the solution and the added catalyst is 1000:0.3 to 1000:0.6, preferably 1000:0.4 to 1000:0.6. When the input amount of the catalyst is within the above-described range, a sufficiently high conversion rate can be obtained, ep the finally produced vinyl chloride-based copolymer can have better heat resistance. Meanwhile, the number of moles of the repeating unit in the chain of the polyvinyl chloride can be calculated by dividing the molecular weight of the used polyvinyl chloride polymer by the molecular weight of the repeating unit, and may be the degree of polymerization of the polyvinyl chloride used.

In the method for producing a vinyl chloride-based copolymer according to the present invention, the molar ratio between repeating units in the chain of the polyvinyl chloride in the solution and the added polymerizable monomer may be 1:1 to 1:3, preferably 1:1.5 to 1:2.5. When the polymerizable monomer is contained in less than this amount, the amount of monomer to be polymerized is relatively small, so that a sufficient degree of conversion cannot be obtained. When the polymerizable monomer is contained in more than this amount, some properties of the finally produced copolymer may be inferior.

The polymerizable monomer is a monomer that contains a double bond and thus can be used as a monomer for radical polymerization, and more specifically, may be at least one selected from the group consisting of C1-12 alkyl (meth) acrylate, styrene, C3-12 cycloalkyl (meth)acrylate, C1-12 sulfoalkyl (meth)acrylate, acrylonitrile, polyoxyethylene (meth) acrylate, poly(ethylene glycol) methyl ether (meth)acrylate, (2-acetoacetoxy)ethyl (meth)acrylate, (meth)acrylamide, N-vinylpyrrolidone, and derivatives thereof. Particularly preferably, the polymerizable monomer may be styrene or methyl methacrylate. When the above-mentioned polymerizable monomer is additionally copolymerized with the polyvinyl chloride, the thermal stability of the finally produced copolymer can be excellent and the excellent properties of polyvinyl chloride itself can be maintained.

In the method for producing a vinyl chloride-based copolymer according to the present invention, the molar ratio between the repeating units in the chain of the polyvinyl chloride in the solution and the added ligand may be 1000:0.5 to 1000:1.5, particularly preferably 1000:0.6 to 1000:1.2. The ligand is a component that can bind to a metal or metal ion in the catalyst through a coordination bond, and the ligand bonded to the metal component allows the polymerization reaction to be effectively controlled.

As the ligand, at least one selected from the group consisting of 2,2'-bipyridine, triphenylphosphine, alkyl-2,2'-bipyridine, 4,4-dinonyl-2,2'-bipyridine, 4,4-diheptyl-2,2'-bipyridine, tris(2-aminoethyl)amine, tris[2-(dimethylamino)ethyl] amine, tris[(2-pyridyl)methyl]amine, N,N,N',N',N''-pentamethyldiethylene triamine, 1,1,4,7,10,10-hexamethyltriethylene tetraamine and tetramethylethylene diamine may be used. The ligands listed above can be easily coordinated with the metal component in the catalyst, and allows the copolymerization reaction to be performed smoothly.

In the method for producing a vinyl chloride-based copolymer according to the present invention, the reducing agent may be at least one soluble reducing agents selected from the group consisting of $Sn(EH)_2$, ascorbic acid, glucose, and azobisisobutyronitrile. In this case, the molar ratio between the repeating units in the chain of the polyvinyl chloride in the solution and the added reducing agent may be 1000:5 to 1000:20, preferably 1000:6 to 1000:12. When the above-mentioned types of soluble reducing agents are used in the above-mentioned ratios, a coupling reaction can be minimized in which the polymerization reaction is terminated by combining radicals generated during the polymerization reaction , and the activity of the catalyst added together can be sufficiently increased.

Meanwhile, in addition to the soluble reducing agent described above, the reducing agent may be a metallic solid reducing agent selected from the group consisting of copper, zinc, magnesium, and iron. The metallic solid reducing agent may be used in a state of being immersed in the solution in a solid form, and may be used in a wire-like form to increase the specific surface area. In the case of the metallic solid reducing agents described above, they have the advantage of being able to be reused repeatedly.

In the method for producing a vinyl chloride-based copolymer according to the present invention, the solvent of the solution may be at least one selected from the group consisting of cyclohexanone, tetrahydrofuran, methyl ethyl ketone, and dimethylformamide. The solvents listed above are advantageous in that they can well dissolve the components described above and do not interfere with the polymerization reaction.

Meanwhile, the step S1 may include a bubbling step for removing oxygen in the solution. If oxygen is present in the solution, a side reaction may be induced during the copolymerization process, so the solution may be bubbled with nitrogen or an inert gas to minimize the oxygen content.

Step S2, which is a polymerization step performed after the step S 1, may be performed at a temperature of 25 to 200°C, preferably 80 to 150°C for 0.1 to 100 hours, preferably 6 to 48 hours. If the temperature in the polymerization step is too low, sufficient energy required for the polymerization reaction cannot be supplied, and thus a sufficient conversion rate cannot be obtained. If the temperature in the polymerization step is too high, there may be a problem that a side reaction occurs due to the high temperature, or the color of the produced vinyl chloride-based copolymer itself is degraded. If the time in the polymerization step is too short, a sufficient conversion rate cannot be obtained, and if it is too long, there is a disadvantage in that a lot of energy is consumed to maintain the reaction.

The S2 step in which the polymerization is performed may be performed until the polymerization conversion rate is 50% or more. When the polymerization reaction is performed under the conditions described above, the conversion rate of the finally obtained copolymer can be 50% or more.

The method for producing a vinyl chloride-based copolymer according to the present invention may further include, in addition to steps S 1 and S2 described above, a step of cooling and filtering the polymerization reaction product (S3), and a step of drying the filtered vinyl chloride-based copolymer (S4). Through the steps S3 and S4, a pure vinyl chloride-based copolymer without unreacted monomers or solvents can be obtained. The cooling and drying temperature conditions in the steps S3 and S4 can be set appropriately by a person skilled in the art as needed.

**Vinyl chloride-based copolymer**

The present invention provides a vinyl chloride-based copolymer prepared through the above-described production method. Specifically, the present invention provides a vinyl chloride-based copolymer comprising a vinyl chloride monomer-derived unit and a polymerizable monomer-derived unit and having a glass transition temperature (Tg) of 90 to 120°C, wherein the polymerizable monomer is at least one selected from the group consisting of C1-12 alkyl (meth) acrylate, styrene, C3-12 cycloalkyl (meth)acrylate, C1-12 sulfoalkyl (meth)acrylate, acrylonitrile, polyoxyethylene (meth) acrylate, poly(ethylene glycol) methyl ether (meth)acrylate, (2-acetoacetoxy)ethyl (meth)acrylate, (meth)acrylamide, N-vinylpyrrolidone, and derivatives thereof.

The vinyl chloride-based copolymer provided by the present invention has a form in which the polymerizable monomer is additionally copolymerized with the vinyl chloride-based polymer, and has a relatively high glass transition temperature, specifically a glass transition temperature of 90 to 120°C, by optimizing the amount of catalyst introduced in the reaction process.

The vinyl chloride-based copolymer of the present invention is particularly suitable for use in fields where conventional PVC is applied, especially in fields that require high heat resistance.

Hereinafter, the present invention will be described in more detail by way of examples and experimental examples to specifically illustrate the present invention, but the present invention is not limited to these examples and experimental examples. However, the examples according to the present invention may be modified in various different forms, and the scope of the present invention should not be construed as being limited to the examples described in detail below. The examples of the present invention are provided to explain the present invention more completely to those skilled in the art.

## Materials

The polyvinyl chloride used had a weight average molecular weight of 62,500 g/mol, and styrene or methyl methacrylate was used as the polymerizable monomer. $Sn(EH)_2$ or copper wire was used as the reducing agent, and $CuCl_2$ was used as the catalyst. Tris[(2-pyridyl)methyl]amine (TPMA) was used as the ligand, and cyclohexanone was used as the solvent.

## Examples and Comparative Examples

After inputting about 450 g of cyclohexanone as a solvent to a 2L flask equipped with a reflux condenser, 25 g of polyvinyl chloride was added and stirred until it was dissolved transparently. Then, a reducing agent and a polymerizable monomer were added, and nitrogen bubbling was performed for about 30 minutes. At this time, a 1% by weight stock solution of a catalyst and a ligand was also prepared using the same solvent, and nitrogen bubbling was performed. Afterwards, the flask was immersed in an oil bath set to a polymerization temperature, and after 30 minutes, the catalyst and the ligand were added. Then, the polymerization reaction was performed for 24 hours. After the polymerization was completed, about 200 g of tetrahydrofuran was added to cool the reaction product until it reached room temperature. Then, the reaction product was precipitated using isopropyl alcohol, filtered, and dried in a vacuum drying oven at 30°C for 24 hours to obtain the final product.

The types and contents of monomers, catalysts, reducing agents and ligands used in each Example and Comparative Example, and polymerization temperatures are summarized in Table 1 below.

[Table 1]

| | Monomer | Catalyst | Ligand | Reducing agent | PVCru:M:Cat:Li: R.A (molar ratio) | Polymerization temperature (°C) |
|---|---|---|---|---|---|---|
| Example 1 | Styrene | $CuCl_2$ | TPMA | $Sn(EH)_2$ | 1000:2000:0.3:0.6 :6 | 90 |
| Example 2 | Styrene | $CuCl_2$ | TPMA | $Sn(EH)_2$ | 1000:2000:0.4:0.8 :8 | 90 |
| Example 3 | Styrene | $CuCl_2$ | TPMA | $Sn(EH)_2$ | 1000:2000:0.6:1.2 :1.2 | 90 |
| Example 4 | Styrene | $CuCl_2$ | TPMA | Cu Wire | 1000:2000:0.4:0.8 :(10 cm) | 90 |
| Example 5 | MMA | $CuCl_2$ | TPMA | Cu Wire | 1000:2000:0.4:0.8 :(10 cm) | 90 |
| Example 6 | MMA | $CuCl_2$ | TPMA | Cu Wire (re-used once) | 1000:2000:0.4:0.8 :(10 cm) | 90 |
| Example 7 | MMA | $CuCl_2$ | TPMA | Cu Wire (re-used 5 times) | 1000:2000:0.4:0.8 :(10 cm) | 90 |
| Example 8 | MMA | $CuCl_2$ | TPMA | Cu Wire | 1000:2000:0.4:0.8 :(10 cm) | 90 |
| Comparative Example 1 | Styrene | $CuCl_2$ | TPMA | - | 1000:1090:17.5:5 2:0 | 120 |
| Comparative Example 2 | Styrene | $CuCl_2$ | TPMA | $Sn(EH)_2$ | 1000:2000:0.1:0.2 :4 | 90 |
| Comparative Example 3 | Styrene | $CuCl_2$ | TPMA | $Sn(EH)_2$ | 1000:2000:0.2:0.4 :8 | 90 |
| Comparative Example 4 | Styrene | $CuCl_2$ | TPMA | $Sn(EH)_2$ | 1000:2000:0.8:1.6 :32 | 90 |

(continued)

|  | Monomer | Catalyst | Ligand | Reducing agent | PVCru:M:Cat:Li: R.A (molar ratio) | Polyme rization tempera ture (°C) |
|---|---|---|---|---|---|---|
| Comparati ve Example 5 | Styrene | CuCl$_2$ | TPMA | Sn(EH)$_2$ | 1000:2000:1.2:2.4 :48 | 90 |

* MMA: methyl methacrylate
* TPMA: tris[(2-pyridyl)methyl]amine
* PVCru: number of repeating units in the chain of polyvinyl chloride
* M: number of moles of polymerizable monomer
* Cat: number of moles of catalyst
* Li: number of moles of ligand
* R.A: (number of moles of reducing agent) / (depth immersed in solution in case of metallic reducing agent)

Meanwhile, among the examples in the table above, Example 8 used recycled PVC, not regular PVC, as a reaction raw material, and the weight average molecular weight of the PVC was also 62,500 g/mol.

**Experimental Example 1. Confirmation of conversion rate**

Before starting the polymerization and after completing the polymerization, 0.2 g of the polymerization sample was aliquoted and precipitated in 4 g of methanol, respectively, and then analyzed by GC to confirm $[M]_0$ and $[M]t$. Afterwards, the conversion rate was calculated using the following equation. Meanwhile, $[M]_0$ refers to the initial monomer amount, and $[M]t$ refers to the monomer amount after completion of the polymerization reaction.

$$\text{Conversion rate} = ([M]_0 - [M]_t) / [M]_0 \times 100\%$$

The results are summarized in Table 2 below.

[Table 2]

|  | Conversion rate (%) |
|---|---|
| Example 1 | 50 |
| Example 2 | 52 |
| Example 3 | 53 |
| Example 4 | 52 |
| Example 5 | 84 |
| Example 6 | 84 |
| Example 7 | 88 |
| Example 8 | 63 |
| Comparative Example 1 | 12 |
| Comparative Example 2 | 10 |
| Comparative Example 3 | 23 |
| Comparative Example 4 | 42 |
| Comparative Example 5 | Not measurable |

As confirmed in Table 2, the examples of the present invention all achieved high conversion rates of 50% or more, while the comparative examples showed low conversion rates of as low as 10%. In particular, Comparative Example 3 used less catalyst than the present invention, and Comparative Example 4 used more catalyst than the present invention. In both Comparative Examples 3 and 4, lower conversion rates were obtained compared to the examples of the present invention, which means that a particularly high conversion rate was achieved within the range of catalyst usage limited in the present invention.

In addition, among the examples, Examples 5 to 8 showed high conversion rates, which was confirmed to be because MMA, the monomer used in Examples 5 to 8, showed higher reactivity than styrene. In the case of Comparative Example 5, it was difficult to measure the conversion rate itself as gelation occurred during the polymerization process. In addition, in the case of Examples 6 and 7 in which the copper wire was reused, high conversion rates were also shown, confirming that a sufficiently high conversion rate could be obtained even when the metallic reducing agent was reused.

**Experimental Example 2. Confirmation of glass transition temperature of copolymer**

The glass transition temperature of the copolymer prepared in the above Examples and Comparative Examples was checked. The glass transition temperature was checked using DSC analysis, and TA Instrument's DSC2500 was used as the analysis equipment. The results are summarized in Table 3 below.

[Table 3]

|  | Glass transition temperature (°C) |
|---|---|
| Example 1 | 90 |
| Example 2 | 91 |
| Example 3 | 91 |
| Example 4 | 91 |
| Example 5 | 109 |
| Example 6 | 109 |
| Example 7 | 110 |
| Example 8 | 106 |
| Comparative Example 1 | 81 |
| Comparative Example 2 | 82 |
| Comparative Example 3 | 85 |
| Comparative Example 4 | 88 |
| Comparative Example 5 | Not measurable |

As can be seen in Table 3, the copolymers prepared in the Examples of the present invention showed high glass transition temperatures of 90°C or higher, while the copolymers prepared in the Comparative Example showed relatively low glass transition temperatures. From this, it can be confirmed that the copolymers prepared using the production method of the present invention have high heat resistance and thus can be applied to various product fields that require high heat resistance. Meanwhile, in the case of Comparative Example 5, just as the conversion rate could not be measured previously, the exact glass transition temperature could not be measured as gelation occurred during polymerization.

**Experimental Example 3. Check whether coupling reaction occurs**

Coupling reaction means that radicals generated during the radical polymerization process combine with other radicals to prevent the polymerization reaction from continuing further. The occurrence of the coupling reaction means that the copolymerization process is not performed smoothly, and it is possible to check through GPC whether the coupling reaction occurs. For Examples and Comparative Examples of the present invention, it was confirmed through GPC whether the coupling reaction occurred, and the results thereof are summarized in Table 4 below. Meanwhile, Waters' ALLIANCE E2695 product was used for GPC analysis.

[Table 4]

|  | Whether coupling reaction occurred | Coupling reaction occurrence time |
|---|---|---|
| Example 1 | X | - |
| Example 2 | X | - |
| Example 3 | X | - |

(continued)

|  | Whether coupling reaction occurred | Coupling reaction occurrence time |
|---|---|---|
| Example 4 | X | - |
| Example 5 | X | - |
| Example 6 | X | - |
| Example 7 | X | - |
| Example 8 | X | - |
| Comparative Example 1 | X | - |
| Comparative Example 2 | X | - |
| Comparative Example 3 | X | - |
| Comparative Example 4 | O | 8 hours after start of reaction |
| Comparative Example 5 | O | 2 hours after start of reaction |

As can be seen in Table 4 above, the coupling reaction occurred in Comparative Examples 4 and 5 in which a large amount of catalyst was used as compared to the present invention, and in particular, in Comparative Example 5 in which more catalysts were used, the coupling reaction occurred very early. In Comparative Example 5, as the coupling reaction occurred at an early time, the polymerization was not sufficiently performed. As a result, as confirmed in Experimental Example 1, the gelation occurred, and thus the conversion rate itself could not be measured.

From this, it was confirmed that the amount of catalyst used in the present invention is within a range capable of achieving an optimal conversion rate without causing the coupling reaction.

**Claims**

1. A method for producing a vinyl chloride-based copolymer, the method including the steps of:

   adding a reducing agent, a polymerizable monomer, a catalyst, and a ligand to a solution containing polyvinyl chloride (S1); and performing a polymerization reaction by raising the temperature of the solution (S2),
   wherein a molar ratio between repeating units in the chain of the polyvinyl chloride in the solution and the added catalyst is 1000:0.3 to 1000:0.6.

2. The method for producing a vinyl chloride-based copolymer according to claim 1, wherein the catalyst is at least one selected from the group consisting of $Cu(0)$, $Fe(0)$, $Cu_2Te$, $Cu_2Se$, $CuCl_2$, $Cu_2S$, $CuzO$, $FeCl_2$, and $Na_2S_2O_4$.

3. The method for producing a vinyl chloride-based copolymer according to claim 1, wherein a molar ratio between repeating units in the chain of the polyvinyl chloride in the solution and the added polymerizable monomer is 1: 1 to 1:3.

4. The method for producing a vinyl chloride-based copolymer according to claim 1, wherein the polymerizable monomer is at least one selected from the group consisting of C1-12 alkyl (meth)acrylate, styrene, C3-12 cycloalkyl (meth) acrylate, C1-12 sulfoalkyl (meth)acrylate, acrylonitrile, polyoxyethylene (meth)acrylate, poly(ethylene glycol) methyl ether (meth)acrylate, (2-acetoacetoxy)ethyl (meth)acrylate, (meth)acrylamide, N-vinylpyrrolidone, and derivatives thereof.

5. The method for producing a vinyl chloride-based copolymer according to claim 1, wherein a molar ratio between repeating units in the chain of the polyvinyl chloride in the solution and the added ligand is 1000:0.5 to 1000: 1.5.

6. The method for producing a vinyl chloride-based copolymer according to claim 1, wherein the ligand is at least one selected from the group consisting of 2,2'-bipyridine, triphenylphosphine, alkyl-2,2'-bipyridine, 4,4-dinonyl-2,2'-bipyridine, 4,4-diheptyl-2,2'-bipyridine, tris(2-aminoethyl)amine, tris[2-(dimethylamino)ethyl]amine, tris[(2-pyridyl) methyl]amine, N,N,N',N',N"-pentamethyldiethylene triamine, 1,1,4,7,10,10-hexamethyltriethylene tetraamine and tetramethylethylene diamine.

7. The method for producing a vinyl chloride-based copolymer according to claim 1, wherein the reducing agent is at least one soluble reducing agents selected from the group consisting of Sn(EH)$_2$, ascorbic acid, glucose, and azobisisobutyronitrile.

8. The method for producing a vinyl chloride-based copolymer according to claim 7, wherein a molar ratio between repeating units in the chain of the polyvinyl chloride in the solution and the added reducing agent is 1000:5 to 1000:20.

9. The method for producing a vinyl chloride-based copolymer according to claim 1, wherein the reducing agent is a metallic solid reducing agent selected from the group consisting of copper, zinc, magnesium, and iron.

10. The method for producing a vinyl chloride-based copolymer according to claim 1, wherein the solvent of the solution is at least one selected from the group consisting of cyclohexanone, tetrahydrofuran, methyl ethyl ketone, and dimethylformamide.

11. The method for producing a vinyl chloride-based copolymer according to claim 1, wherein the step S1 includes a bubbling step for removing oxygen in the solution.

12. The method for producing a vinyl chloride-based copolymer according to claim 1, wherein the step S2 is performed at a temperature of 25 to 200°C for 0.1 to 100 hours.

13. The method for producing a vinyl chloride-based copolymer according to claim 1, wherein the step S2 is performed until the polymerization conversion rate is 50% or more.

14. The method for producing a vinyl chloride-based copolymer according to claim 1, wherein the method further includes the steps of:

cooling and filtering the polymerization reaction product (S3); and
drying the filtered vinyl chloride-based copolymer (S4).

15. A vinyl chloride-based copolymer comprising a vinyl chloride monomer-derived unit and a polymerizable monomer-derived unit,

wherein the polymerizable monomer is at least one selected from the group consisting of C1-12 alkyl (meth) acrylate, styrene, C3-12 cycloalkyl (meth)acrylate, C1-12 sulfoalkyl (meth)acrylate, acrylonitrile, polyoxyethylene (meth)acrylate, poly(ethylene glycol) methyl ether (meth)acrylate, (2-acetoacetoxy)ethyl (meth)acrylate, (meth)acrylamide, N-vinylpyrrolidone, and derivatives thereof, and
wherein the copolymer has a glass transition temperature (Tg) of 90 to 120°C.

<table>
<tr><td colspan="2"><b>INTERNATIONAL SEARCH REPORT</b></td><td>International application No.<br><br><b>PCT/KR2023/016682</b></td></tr>
</table>

| A. | CLASSIFICATION OF SUBJECT MATTER |
|---|---|
| | **C08F 259/04**(2006.01)i; **C08F 8/04**(2006.01)i; **C08F 4/06**(2006.01)i; **C08F 6/12**(2006.01)i |

According to International Patent Classification (IPC) or to both national classification and IPC

| B. | FIELDS SEARCHED |
|---|---|

Minimum documentation searched (classification system followed by classification symbols)

C08F 259/04(2006.01); C08F 12/00(2006.01); C08F 14/00(2006.01); C08F 14/06(2006.01); C08F 2/38(2006.01); C08F 259/00(2006.01); C08F 4/10(2006.01); C08F 8/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리염화비닐(polyvinyl chloride, PVC), 환원제(reducing agent), 스티렌(styrene), 메틸메타크릴레이트(methyl methacrylate, MMA), 촉매(catalyst), 리간드(ligand), 공중합체(copolymer), 원자 이동 라디칼 중합(ATRP)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 6437044 B1 (PERCEC, V. et al.) 20 August 2002 (2002-08-20)<br>See column 4, line 64 – column 5, line 17; column 6, lines 13-67 and column 7, lines 5-13; claims 1, 5-7, 9, 16 and 24-26; example 3; and table 1. | 1-14 |
| DY | KR 10-2013-0136936 A (LG CHEM, LTD.) 13 December 2013 (2013-12-13)<br>See paragraphs [0025]-[0034]; and claims 1 and 6-8. | 1-14 |
| X | COŞKUN, M. et al. Synthesis, characterization and investigation of dielectric properties of two-armed graft copolymers prepared with methyl methacrylate and styrene onto PVC using atom transfer radical polymerization. 2011, vol. 71, pp. 395-401.<br>See abstract; page 396; and table 1. | 15 |
| X | PAIK, H.-J. et al. Synthesis and characterization of graft copolymers of poly(vinyl chloride) with styrene and (meth)acrylates by atom transfer radical polymerization. Macromol. Rapid Commun. 1998, vol. 19, pp. 47-52.<br>See pages 47-48; and table 1. | 15 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 February 2024** | **02 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/016682**

C.     DOCUMENTS CONSIDERED TO BE RELEVANT

| Category* | Citation of document, with indication, where appropriate, of the relevant passages | Relevant to claim No. |
|---|---|---|
| X | US 7345127 B2 (PERCEC, V. et al.) 18 March 2008 (2008-03-18)<br>    See claims 23 and 26. | 15 |
| A | WO 2021-074001 A1 (BASF COATINGS GMBH) 22 April 2021 (2021-04-22)<br>    See entire document. | 1-15 |
| A | EP 0966489 B1 (CARNEGIE MELLON UNIVERSITY) 15 November 2006 (2006-11-15)<br>    See entire document. | 1-15 |

Form PCT/ISA/210 (second sheet) (July 2022)

INTERNATIONAL SEARCH REPORT
Information on patent family members

International application No.

**PCT/KR2023/016682**

| Patent document cited in search report | | | Publication date (day/month/year) | Patent family member(s) | | | Publication date (day/month/year) |
|---|---|---|---|---|---|---|---|
| US | 6437044 | B1 | 20 August 2002 | AU | 2002-249953 | A1 | 06 August 2002 |
| | | | | CA | 2435217 | A1 | 01 August 2002 |
| | | | | MX | PA03006621 | A | 02 December 2004 |
| | | | | WO | 02-059171 | A2 | 01 August 2002 |
| | | | | WO | 02-059171 | A3 | 21 August 2003 |
| KR | 10-2013-0136936 | A | 13 December 2013 | CN | 104487468 | A | 01 April 2015 |
| | | | | CN | 104487468 | B | 16 June 2017 |
| | | | | EP | 2857425 | A1 | 08 April 2015 |
| | | | | EP | 2857425 | B1 | 14 October 2020 |
| | | | | JP | 2015-518917 | A | 06 July 2015 |
| | | | | JP | 5995125 | B2 | 21 September 2016 |
| | | | | TW | 201412783 | A | 01 April 2014 |
| | | | | TW | I501980 | B | 01 October 2015 |
| | | | | US | 2014-0066573 | A1 | 06 March 2014 |
| | | | | US | 9090764 | B2 | 28 July 2015 |
| | | | | WO | 2013-183942 | A1 | 12 December 2013 |
| US | 7345127 | B2 | 18 March 2008 | EP | 1406935 | A1 | 14 April 2004 |
| | | | | EP | 1853638 | A1 | 14 November 2007 |
| | | | | MX | 2007009037 | A | 22 February 2008 |
| | | | | MX | PA03011993 | A | 26 March 2004 |
| | | | | US | 2002-0173611 | A1 | 21 November 2002 |
| | | | | US | 2003-0078353 | A1 | 24 April 2003 |
| | | | | US | 2005-0131186 | A1 | 16 June 2005 |
| | | | | US | 2005-0148734 | A1 | 07 July 2005 |
| | | | | US | 2008-0039601 | A1 | 14 February 2008 |
| | | | | US | 6838535 | B2 | 04 January 2005 |
| | | | | US | 6911515 | B2 | 28 June 2005 |
| | | | | US | 7026420 | B2 | 11 April 2006 |
| | | | | US | 7470762 | B2 | 30 December 2008 |
| | | | | WO | 02-077043 | A1 | 03 October 2002 |
| | | | | WO | 03-002621 | A1 | 09 January 2003 |
| | | | | WO | 2006-080928 | A1 | 03 August 2006 |
| WO | 2021-074001 | A1 | 22 April 2021 | CA | 3147966 | A1 | 22 April 2021 |
| | | | | CN | 114514256 | A | 17 May 2022 |
| | | | | EP | 4045544 | A1 | 24 August 2022 |
| | | | | JP | 2022-553022 | A | 21 December 2022 |
| | | | | MX | 2022003731 | A | 02 May 2022 |
| EP | 0966489 | B1 | 15 November 2006 | AT | 423794 | T | 15 March 2009 |
| | | | | AT | E345356 | T1 | 15 December 2006 |
| | | | | AU | 1073997 | A | 05 June 1997 |
| | | | | AU | 5306996 | A | 16 October 1996 |
| | | | | AU | 6687798 | A | 29 September 1998 |
| | | | | BR | 9604887 | A | 30 November 1999 |
| | | | | BR | 9611512 | A | 29 June 1999 |
| | | | | CA | 2216853 | A1 | 03 October 1996 |
| | | | | CA | 2216853 | C | 25 October 2005 |
| | | | | CA | 2585469 | C | 13 July 2010 |
| | | | | CN | 1134460 | C | 14 January 2004 |
| | | | | CN | 1150234 | C | 19 May 2004 |
| | | | | CN | 1183107 | A | 27 May 1998 |

Form PCT/ISA/210 (patent family annex) (July 2022)

**INTERNATIONAL SEARCH REPORT**
Information on patent family members

International application No.

**PCT/KR2023/016682**

| Patent document cited in search report | Publication date (day/month/year) | Patent family member(s) | | | Publication date (day/month/year) |
|---|---|---|---|---|---|
| | | CN | 1206424 | A | 27 January 1999 |
| | | CN | 1515599 | A | 28 July 2004 |
| | | DE | 60024605 | T2 | 24 August 2006 |
| | | DE | 69635802 | T2 | 19 October 2006 |
| | | EP | 0817806 | A1 | 14 January 1998 |
| | | EP | 0817806 | B1 | 08 February 2006 |
| | | EP | 0861272 | A1 | 02 September 1998 |
| | | EP | 0861272 | B1 | 05 July 2006 |
| | | EP | 0966489 | A1 | 29 December 1999 |
| | | IL | 117626 | A | 20 August 2006 |
| | | JP | 10-509475 | A | 14 September 1998 |
| | | JP | 2000-500516 | A | 18 January 2000 |
| | | JP | 2001-514697 | A | 11 September 2001 |
| | | JP | 5264030 | B2 | 14 August 2013 |
| | | JP | 5559480 | B2 | 23 July 2014 |
| | | KR | 10-0282757 | B1 | 15 February 2001 |
| | | KR | 10-0468998 | B1 | 16 May 2005 |
| | | KR | 10-1998-0703419 | A | 05 November 1998 |
| | | KR | 10-1998-7003419 | A | 05 November 1998 |
| | | KR | 10-1999-0067638 | A | 25 August 1999 |
| | | MX | 9707437 | A | 31 July 1998 |
| | | MX | 9803888 | A | 31 May 1999 |
| | | TW | 593347 | B | 21 June 2004 |
| | | US | 2002-0183473 | A1 | 05 December 2002 |
| | | US | 2002-0193538 | A1 | 19 December 2002 |
| | | US | 2003-0181619 | A1 | 25 September 2003 |
| | | US | 2003-0216528 | A1 | 20 November 2003 |
| | | US | 2004-0171779 | A1 | 02 September 2004 |
| | | US | 2004-0204556 | A1 | 14 October 2004 |
| | | US | 2005-0090632 | A1 | 28 April 2005 |
| | | US | 2005-0143546 | A1 | 30 June 2005 |
| | | US | 2006-0258826 | A1 | 16 November 2006 |
| | | US | 5763548 | A | 09 June 1998 |
| | | US | 5807937 | A | 15 September 1998 |
| | | US | 6407187 | B1 | 18 June 2002 |
| | | US | 6512060 | B1 | 28 January 2003 |
| | | US | 6538091 | B1 | 25 March 2003 |
| | | US | 6541580 | B1 | 01 April 2003 |
| | | US | 6624263 | B2 | 23 September 2003 |
| | | US | 6887962 | B2 | 03 May 2005 |
| | | US | 7049373 | B2 | 23 May 2006 |
| | | US | 7125938 | B2 | 24 October 2006 |
| | | US | 7572874 | B2 | 11 August 2009 |
| | | US | 7678869 | B2 | 16 March 2010 |
| | | US | 7825199 | B1 | 02 November 2010 |
| | | WO | 00-56795 | A1 | 28 September 2000 |
| | | WO | 02-068485 | A1 | 06 September 2002 |
| | | WO | 96-30421 | A1 | 03 October 1996 |
| | | WO | 97-18247 | A1 | 22 May 1997 |
| | | WO | 98-40415 | A1 | 17 September 1998 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220139524
- KR 1020130136936 A
- KR 1020140125134 A